# EUROPÄISCHE PATENTSCHRIFT

(11) **EP 0 952 502 B1**
(45) Veröffentlichungstag und Bekanntmachung des Hinweises auf die Patenterteilung: **14.07.2004**
(21) Anmeldenummer: 99107077.2
(22) Anmeldetag: 12.04.1999
(51) Int. Cl.: G05B 19/042

(54) **System für den Unterhalt von Aufzugsanlagen, Fahrtreppen oder Fahrsteigen**
Maintenance system fur elevator installations, escalators or moving walkways
Système d'entretien pour ascenseurs, escaliers roulants ou trottoirs roulants

(30) Priorität: 21.04.1998 EP 98810349
(43) Veröffentlichungstag der Anmeldung: 27.10.1999
(73) Patentinhaber: INVENTIO AG, 6052 Hergiswil NW (CH)
(72) Erfinder: Henneau, Philippe, 6004 Luzern (CH)

(56) Entgegenhaltungen:
- EP-A- 0 252 266
- EP-A- 0 615 945
- EP-A- 0 645 684
- EP-A- 0 672 906
- EP-A- 0 789 288
- CN-A- 1 177 869
- FR-A- 2 690 777

## Beschreibung

Die Erfindung betrifft ein System für den Unterhalt von Aufzugsanlagen, Fahrtreppen oder Fahrsteigen bestehend aus einer Mensch/Maschine-Schnittstelle für den Datenverkehr zwischen vor Ort oder rückwärtigem Unterhaltspersonal und einer Aufzugssteuerung, Fahrtreppensteuerung oder Fahrsteigsteuerung, aus Kommunikationsmitteln für den vor Ort Datenverkehr sowie aus Kommunikationsmitteln für den rückwärtigen Datenverkehr, wobei die Mensch/Maschine-Schnittstelle die Daten einerseits in eine für die Steuerung verständliche Form und andererseits in eine für Personen verständliche Form umsetzt.

Aus der Patentschrift EP 252 266 ist ein Fernverwaltungssystem bekannt geworden, bei dem mehrere Aufzugsanlagen von einer rückwärtigen Zentrale aus verwaltet und überwacht werden. Der Datenaustausch erfolgt via öffentliches Telefonnetz von der Zentrale zur peripheren Aufzugsanlage und von der Aufzugsanlage zur Zentrale. Die Aufzugsanlage kann auch vor Ort mittels Wartungskoffer mit Tastatur und Bildschirm datenmässig gewartet werden. Zentrale und Peripherie sind bezüglich Datenaustausch gleichberechtigte Partner. Zentrale oder Peripherie können einen Verbindungsaufbau zwecks Datenaustausch einleiten. Besondere Anlagezustände gibt die Peripherie automatisch an die Zentrale weiter. Als bidirektionale Mensch/Maschine-Schnittstelle dienen Tastatur und Datensichtgerät.

Bei der bekannten Einrichtung kann es sich ungünstig auswirken, dass die Mensch/Maschine-Kommunikation in schriftlicher Form erfolgt und daher zur Bedienung des Fernverwaltungssystems für Aufzugsanlagen qualifiziertes Personal notwendig ist.

Mit der Schrift EP 0 789 288 A1 ist ein Fernüberwachungssystem mit einer mobilen Serviceeinheit zur Herstellung einer drahtlosen Verbindung zwischen einer zentralen Überwachungsvorrichtung und einer Aufzugssteuerung bekannt geworden. Mit der mobilen Serviceeinheit wird dem Unterhaltspersonal vor Ort ermöglicht, mit der zentralen Überwachungsvorrichtung und/oder mit der Aufzugssteuerung Kontakt zu halten und Daten auszutauschen. Die zentrale Überwachungsvorrichtung kann via Telefonanschluss die mobile Serviceeinheit anwählen. Die mobile Serviceeinheit umfasst eine Dateneingabeeinheit in Form einer Tastatur eines Funktelefons und eine Datenausgabeeinheit in Form des Displays des Funktelefons.

Bei der bekannten Einrichtung kann es sich ungünstig auswirken, dass die Daten über die Tastatur eingegeben werden müssen und/oder die Daten auf dem Display abgelesen werden müssen. Das Unterhaltspersonal hat so weder die Hände noch die Augen frei für die Unterhaltsarbeiten.

Hier will die Erfindung Abhilfe schaffen. Die Erfindung, wie sie in Anspruch 1 gekennzeichnet ist, löst die Aufgabe, die Nachteile der bekannten Einrichtng zu vermeiden und ein System zu schaffen, mittels dem die Kommunikation zwischen Unterhaltspersonal und einer Aufzugssteuerung oder einer Fahrtreppensteurung oder einer Fahrsteigsteuerung vereinfacht wird.

Die durch die Erfindung erreichten Vorteile sind im wesentlichen darin zu sehen, dass die Kommunikation mit der Anlage mittels immer und überall zur Verfügung stehenden Telefonapparaten möglich ist, deren Bedienung keine besonderen Kenntnisse erfordert. Die leicht zu handhabende Kommunikation verkürzt die störungsbedingten Stillstandszeiten der Anlage. Ausserdem kann der Betreiber dank der einfachen Mensch/Maschine-Kommunikation Betriebsparameter wie beispielsweise Türöffnungszeiten, Parkstockwerke, etc. ohne Unterstützung von Unterhaltspersonal eigenständig ändern.

Im folgenden wird die Erfindung anhand von ein Ausführungsbeispiel darstellenden Zeichnungen näher erläutert. Es zeigen:
- Fig. 1: ein System für den verbalen Unterhalt von Aufzugsanlagen, Fahrtreppen oder Fahrsteigen,
- Fig. 2: eine Spracherkennungs-/Sprachsyntheseeinheit als Mensch/Maschine-Schnittstelle,
- Fig. 3: ein Flussdiagramm zur Darstellung eines verbalen vor Ort Zugriffes auf die Steuerung,
- Fig. 4: ein Flussdiagramm zur Darstellung eines verbalen rückwärtigen Zugriffes auf die Steuerung,
- Fig. 5: ein Flussdiagramm zur Darstellung eines von der Steuerung ausgelösten verbalen Dienst-Zugriffes und
- Fig. 6: Einzelheiten eines verbalen Zugriffes auf die Steuerung.

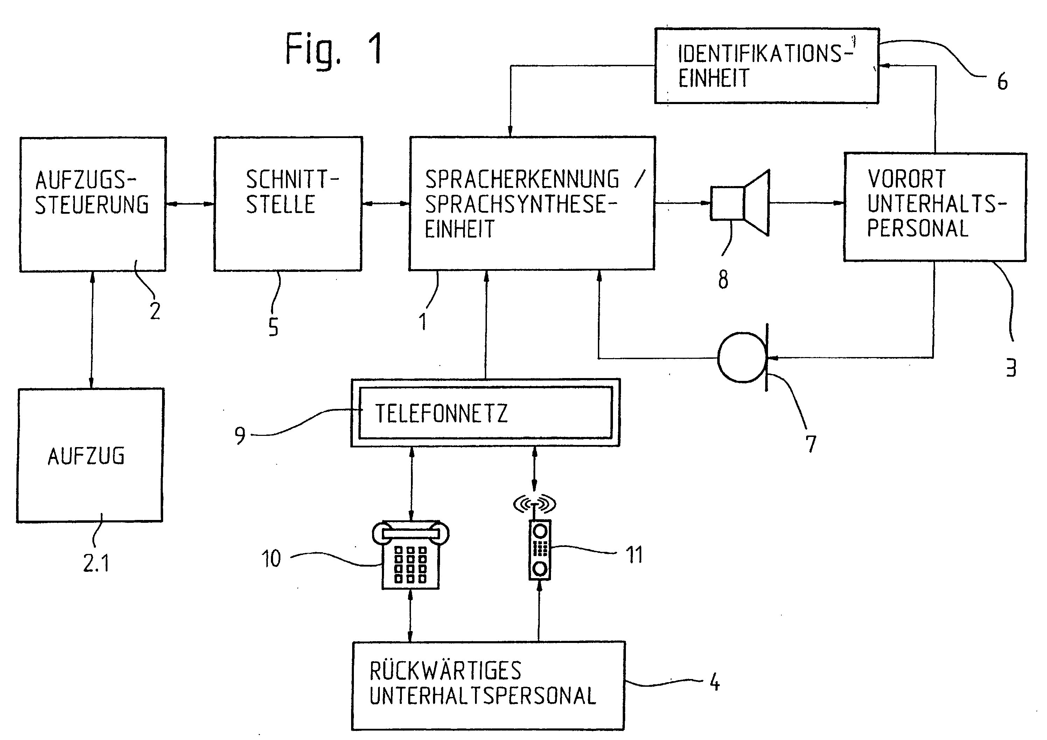

In den Fig. 1 bis 6 ist mit 1 eine Spracherkennungs-/Sprachsyntheseeinheit bezeichnet, die als Mensch/Maschine-Schnittstelle zwischen einer Steuerung 2 für Aufzüge 2.1, Fahrtreppen oder Fahrsteige und vor Ort/rückwärtiges Unterhaltspersonal 3, 4, Anlagebetreiber oder Anlagebenutzer vorgesehen ist. Im weiteren Beschreibungsverlauf wird als Sammelbegriff für Steuerung für Aufzüge, Fahrtreppen oder Fahrsteige lediglich Steuerung 2 bzw. als Sammelbegriff für vor Ort/rückwärtiges Unterhaltspersonal 3, 4, Anlagebetreiber oder Anlagebenutzer lediglich vor Ort/rückwärtiges Unterhaltspersonal 3, 4 verwendet. Die Spracherkennungs-/Sprachsyntheseeinheit 1 kommuniziert mit der Steuerung 2 mittels einer Schnittstelle 5. Vor dem Zugriff auf die Spracherkennungs-/Sprachsyntheseeinheit 1 und somit auf die Steuerung 2 wird vor Ort Unterhaltspersonal 3 mittels einer Identifikationseinheit 6 identifiziert. Die Identifikation kann beispielsweise mittels einer Code-Karte oder eines über eine Tastatur eingebbaren Zahlencodes erfolgen. Alternativ kann auch die mittels eines Mikrofones 7 erfasste Sprache des Unterhaltspersonals 3 als Identifikation dienen. Nach erfolgreicher Identifikation des vor Ort Unterhaltspersonals 3 baut die Spracherkennungs-/Sprachsyntheseeinheit 1 eine bidirektionale Verbindung zwischen der Steuerung 2 und dem vor Ort Unterhaltspersonal 3 auf, wobei als Schnittstelle zwischen Spracherkennungs-/Sprachsyntheseeinheit 1 und vor Ort Unterhaltspersonal 3 das Mikrofon 7 und ein Lautsprecher 8 dient. Die Spracherkennungs-/Sprachsyntheseeinheit 1 kann auch mit rückwärtigem Unterhaltspersonal 4 via privates oder öffentliches Telefonnetz 9 oder via ein anderes kommunikationsfähiges Netz in Verbindung treten bzw. rückwärtiges Unterhaltspersonal 4 kann via Telefon 10 oder Mobilfon 11 die Spracherkennungs-/Sprachsyntheseeinheit 1 erreichen. Das rückwärtige Unterhaltspersonal 4 muss sich mittels über die Tastatur des Telefons 10 bzw. Mobilfons 11 eingegebenem Zahlencode identifizieren. Nach erfolgreicher Identifikation des rückwärtigen Unterhaltspersonals 4 baut die Spracherkennungs-/Sprachsyntheseeinheit 1 eine bidirektionale Verbindung zwischen der Steuerung 2 und dem rückwärtigen Unterhaltspersonal 4 auf, wobei als Schnittstelle zwischen Spracherkennungs-/Sprachsyntheseeinheit 1 und rückwärtigem Unterhaltspersonal 4 das Telefon 10 bzw. Mobilfon 11 und das Telefonnetz 9 oder ein anderes kommunikationsfähiges Netz dient. Auch die Steuerung 2 kann in Verbindung mit dem Unterhaltspersonal 3, 4 treten. Im Falle des rückwärtigen Unterhaltes löst die Steuerung 2 einen Verbindungsaufbau via Telefonnetz 9 aus. Die Steuerung identifiziert und meldet sich mit ihrer Identifikationsnummer. Das rückwärtige Unterhaltspersonal 4 identifiziert sich wie weiter oben beschrieben. Nach erfolgreicher Identifikation des rückwärtigen Unterhaltspersonals 4 baut die Spracherkennungs-/Sprachsyntheseeinheit 1 eine bidirektionale Verbindung zwischen der Steuerung 2 und dem rückwärtigen Unterhaltspersonal 4 auf.

Die bidirektionale Verbindung zwischen Steuerung 2 und Unterhaltspersonal 3, 4 ermöglicht folgende Kommunikation zwischen Steuerung und Unterhaltspersonal 3, 4: Die Steuerung 2 meldet Betriebszustände, Parameter und Fehlermeldungen. Das Unterhaltspersonal 3, 4 kann Parameter ändern und/oder Befehle absetzen, wobei das Unterhaltspersonal 3, 4 verbal geführt wird wie beispielsweise "Taste #1 drücken für den Zugriff auf die Türparameter" oder "Taste #2 drücken für die Abfrage des Antriebszustandes". Alternativ können die Programmwahl oder sonstige Befehle oder Weisungen auch verbal via Mikrofon 7 oder Telefon 10 bzw. Mobilfon 11 eingegeben werden.

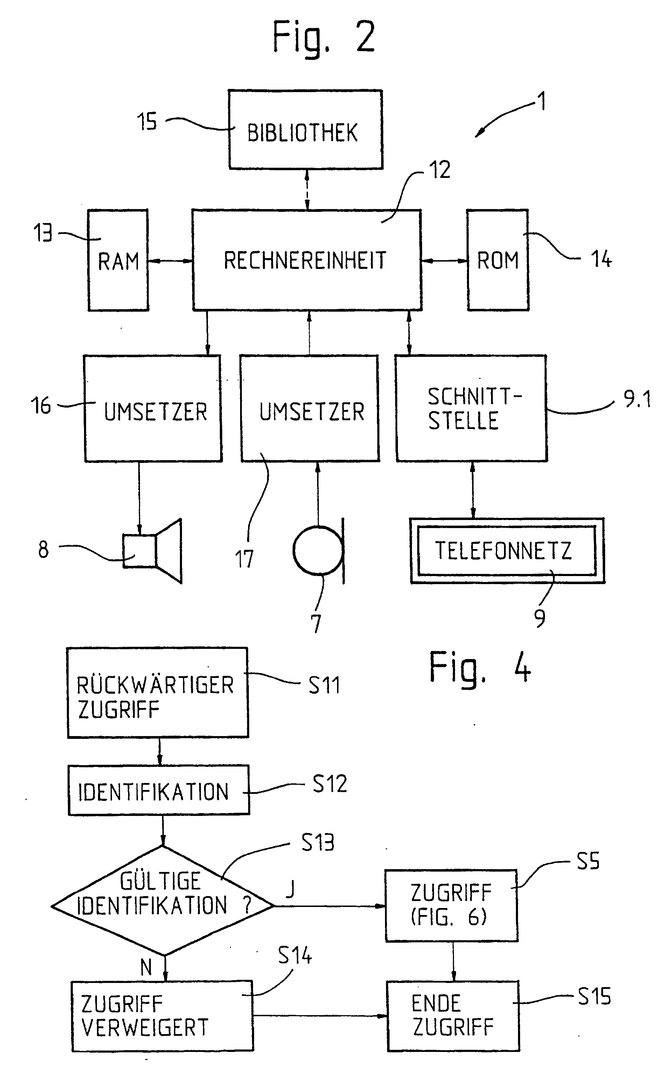

Fig. 2 zeigt Einzelheiten der Spracherkennungs-/Sprachsyntheseeinheit 1 mit einer Rechnereinheit 12, die mit einem RAM Speicher 13 und einem ROM Speicher 14 verbunden ist. Im RAM Speicher 13 werden Daten gespeichert und im ROM Speicher 14 ist das Systemprogramm für den Unterhaltsdatenverkehr abgelegt. Die Rechnereinheit hat Zugriff auf eine Bibliothek 15, in der Sprachmuster beispielsweise auf einer Diskette oder in einem nichtflüchtigen Speicher abgelegt sind, aus denen die Rechnereinheit 12 Worte und Sätze in digitaler Form generiert. Ein erster Umsetzer 16 decodiert die digitalen Worte und Sätze in analoge Signale, welche vom Lautsprecher 8 für das Unterhaltspersonal 3 hörbar gemacht werden. Ein zweiter Umsetzer 17 wandelt die analogen Signale des Mikrofons 7 in digitale Signale um, welche von der Rechnereinheit 12 zusammen mit der Bibliothek 15 in maschinenlesbare Zeichen umgesetzt werden. Die Rechnereinheit 12 kommuniziert mit dem Telefonnetz 9 mittels einer Schnittstelle 9.1.

Fig. 3 zeigt ein Flussdiagramm zur Darstellung eines verbalen vor Ort Zugriffes auf die Steuerung 2. In einem ersten Schritt S1 ist die Absicht des vor Ort Unterhaltspersonals 3 dargestellt, auf die Steuerung 2 zuzugreifen. Im nächsten Schritt S2 wird geprüft, ob die Identifikation des vor Ort Unterhaltspersonals 3 mittels Tastatur und Zahlencode oder mittels Code-Karte erfolgt.

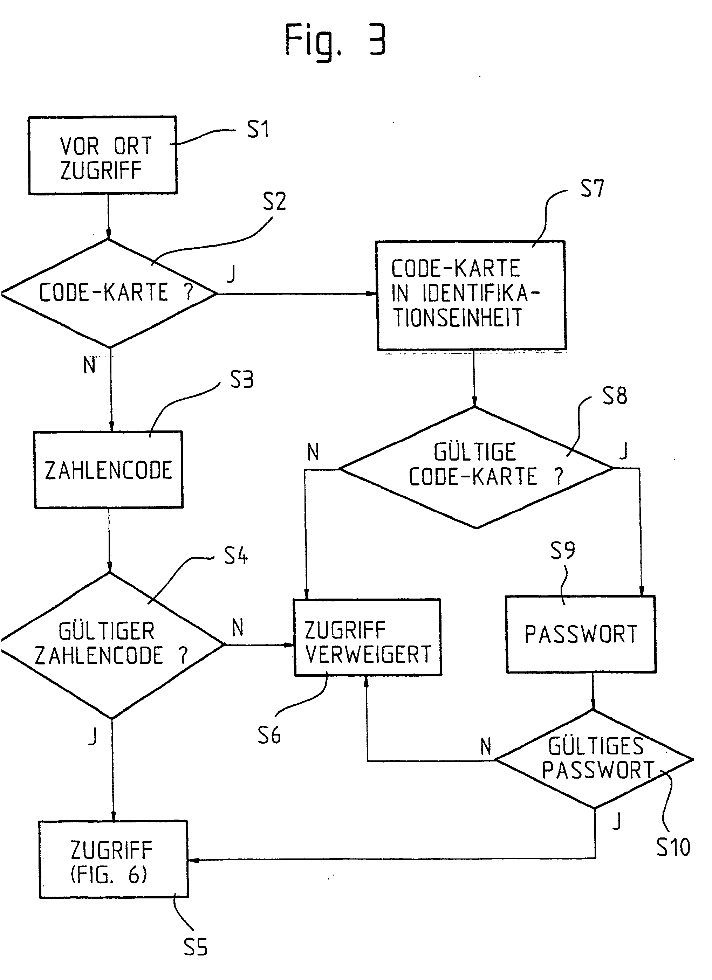

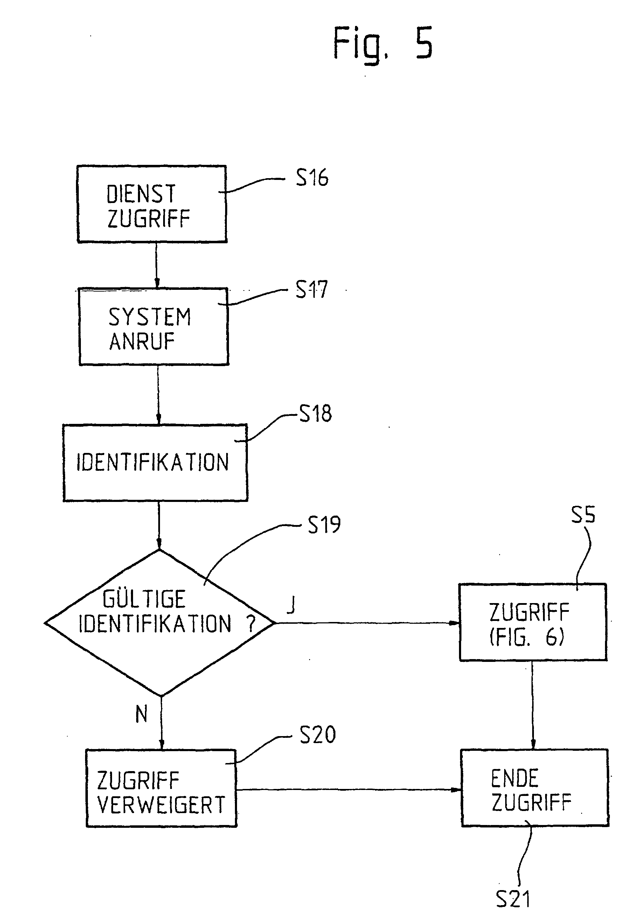

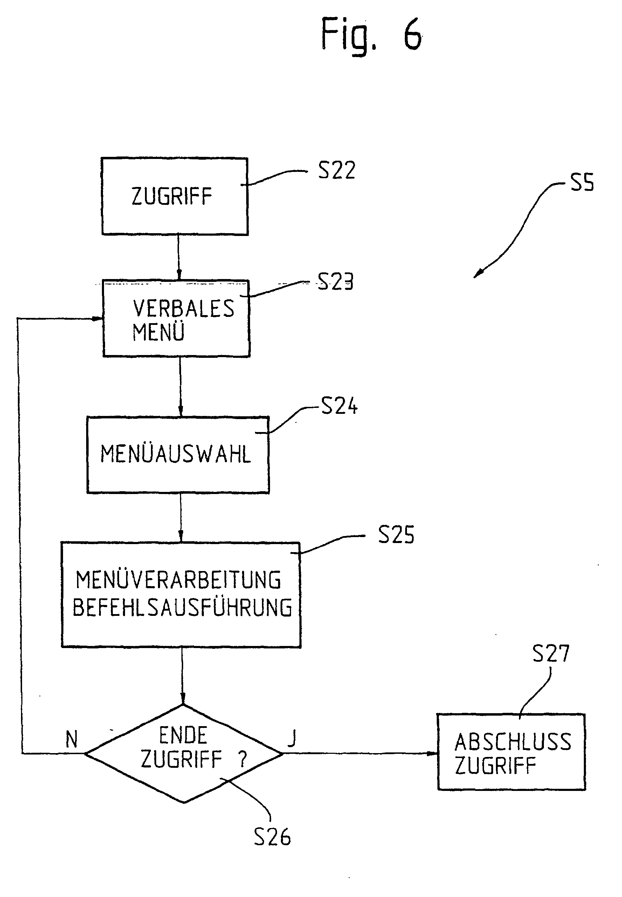

Bei einem mit N symbolisierten Ausgang des Prüfschrittes S2 wird das Zugriffssprozedere im Schritt S3 mit der Eingabe des Zahlencodes fortgesetzt. Die Prüfung des Zahlencodes wird im Schritt S4 erledigt. Bei einem mit J symbolisierten positiven Ausgang des Prüfschrittes S4 wird das Zugriffssprozedere im Schritt S5 gemäss Fig. 6 fortgesetzt. Bei einem mit N symbolisierten negativen Ausgang des Prüfschrittes S4 wird der Zugriff im Schritt S6 verweigert.

Bei einem mit J symbolisierten positiven Ausgang des Prüfschrittes S2 wird die Code-Karte im Schritt S7 von der Identifikationseinheit 6 gelesen und im Schritt S8 auf Gültigkeit geprüft. Eine ungültige Code-Karte führt zum Schritt S6 und somit zur Zugriffsverweigerung. Nach der Erkennung einer gültigen Code-Karte muss im Schritt S9 ein Passwort eingegeben werden. Bei einem mit J symbolisierten positiven Ausgang des Prüfschrittes S10 wird das Zugriffssprozedere im Schritt S5 gemäss Fig. 6 fortgesetzt. Ein ungültiges Passwort führt zum Schritt S6 und somit zur Zugriffsverweigerung.

Fig. 4 zeigt ein Flussdiagramm zur Darstellung eines verbalen rückwärtigen Zugriffes auf die Steuerung 2. In einem Schritt S11 ist die Absicht des rückwärtigen Unterhaltspersonals 4 dargestellt, auf die Steuerung 2 zuzugreifen. Das Unterhaltspersonal 4 wählt auf der Tastatur des Telefons 10 bzw. Mobilfons 11 die entsprechende Nummer. Im nächsten Schritt S12 antwortet die Spracherkennungs-/Sprachsyntheseeinheit 1 und verlangt die Identifikation. Im Schritt S13 wird geprüft, ob die Identifikation des rückwärtigen Unterhaltspersonals 4 gültig ist. Bei einem mit J symbolisierten Ausgang des Prüfschrittes S13 wird das Zugriffsprozedere im Schritt S5 gemäss Fig. 6 fortgesetzt. Bei einem mit N symbolisierten negativen Ausgang des Prüfschrittes S13 wird der Zugriff im Schritt S14 verweigert und das Zugriffsprozedere im Schritt S15 beendet und die Telefonverbindung aufgehoben.

Fig. 5 zeigt ein Flussdiagramm zur Darstellung eines von der Steuerung 2 ausgelösten verbalen Dienst-Zugriffes. Im Schritt S16 löst die Steuerung 2 einen Anruf für das rückwärtige Unterhaltspersonal 4 aus. Im nachfolgenden Schritt S17 stellt die Spracherkennungs-/Sprachsyntheseeinheit 1 die Telefonverbindung her und wählt die Nummer des rückwärtigen Unterhaltspersonals 4. Im Schritt S18 meldet sich das rückwärtige Unterhaltspersonal 4 per Telefon 10 bzw. per Mobilfon 11, die Spracherkennungs-/Sprachsyntheseeinheit 1 stellt sich verbal vor und verlangt die Identifikation. Im Schritt S19 wird geprüft, ob die Identifikation des rückwärtigen Unterhaltspersonals 4 gültig ist. Bei einem mit J symbolisierten Ausgang des Prüfschrittes S19 wird das Zugriffsprozedere im Schritt S5 gemäss Fig. 6 fortgesetzt. Bei einem mit N symbolisierten negativen Ausgang des Prüfschrittes S13 wird der Zugriff im Schritt S20 verweigert und das Zugriffsprozedere im Schritt S21 beendet und die Telefonverbindung aufgehoben.

Fig. 6 zeigt einen Ablauf eines verbalen Zugriffes auf die Steuerung 2. Im Schritt S22 rapportiert die Steuerung 2 die aufgetretenen Störungen und gibt Hinweise auf mögliche Fehlerursachen. Im Schritt S23 wird die Menüauswahl verbal vorgestellt. Beispielsweise kann das Türprogramm durch Eingabe der #1 oder das Antriebsprogramm durch Eingabe der #2 ausgewählt werden. Auch sind Menüs zur Abfrage von statistischen Daten vorgesehen. Im Schritt S24 gibt das Unterhaltspersonal 3, 4 die dem gewünschten Programm entsprechende Zahl auf der Tastatur ein. Alternativ können die Programmwahl oder sonstige Befehle oder Weisungen auch verbal via Mikrofon 7 oder Telefon 10 bzw. Mobilfon 11 eingegeben werden. Im Schritt S25 arbeitet die Steuerung 2 gemäss den durch die Menüauswahl vorgegebenen Weisungen und führt entsprechende Befehle aus. Im Schritt S26 wird geprüft, ob der Zugriff beendet werden soll. Bei einem mit N symbolisierten negativen Ausgang des Prüfschrittes S26 wird der Zugriff mit dem Schritt S23 fortgesetzt. Bei einem mit J symbolisierten Ausgang des Prüfschrittes S26 wird das Zugriffsprozedere im Schritt S27 abgeschlossen.

Der Ablauf eines verbalen Zugriffes auf die Steuerung 2 ist abhängig von der Identifikation. Wenn beispielsweise der Anlagebetreiber mit der Steuerung 2 kommuniziert, werden keine Fehlermeldungen rapportiert und die Menüauswahl beispielsweise auf die Veränderung von Betriebsparametern oder auf die Eingabe von Fahrbefehlen eingeschränkt.

## Patentansprüche

1. System für den Unterhalt von Aufzugsanlagen, Fahrtreppen oder Fahrsteigen bestehend aus einer Mensch/Maschine-Schnittstelle für den Datenverkehr zwischen vor Ort oder rückwärtigem Unterhaltspersonal und einer Aufzugssteuerung, Fahrtreppensteuerung oder Fahrsteigsteuerung, aus Kommunikationsmitteln für den vor Ort Datenverkehr sowie aus Kommunikationsmitteln für den rückwärtigen Datenverkehr, wobei die Mensch/Maschine-Schnittstelle die Daten einerseits in eine für die Steuerung verständliche Form und andererseits in eine für Personen verständliche Form umsetzt,
**dadurch gekennzeichnet,**
**dass** eine Einrichtung zur verbalen Kommunikation des Unterhaltspersonals mit der Steuerung vorgesehen ist, wobei eine Spracherkennungs-/Sprachsyntheseeinheit (1) zur Umsetzung der in verbaler Form abgesetzten Daten des Unterhaltspersonals in Steuerungsdaten und zur Umsetzung der Steuerungsdaten in für das Unterhaltspersonal hörbare Daten vorgesehen ist.

2. System nach Anspruch 1,
**dadurch gekennzeichnet,**
**dass** die Spracherkennungs-/Sprachsyntheseeinheit (1) mit einem Telefonnetz (9) verbunden ist und
**dass** der Datenverkehr mittels Telefon (10, 11) machbar ist.

3. System nach einem der Ansprüche 1 oder 2,
**dadurch gekennzeichnet,**
**dass** die Spracherkennungs-/Sprachsyntheseeinheit (1) eine Rechnereinheit (12) zur Steuerung des Datenverkehrs, eine Bibliothek mit Sprachmuster, Speicher (13, 14) mit Daten und Programmen und Umsetzer (16, 17) zur Signalumwandlung aufweist.

4. System nach Anspruch 3,
**dadurch gekennzeichnet,**
**dass** eine Identifikationseinrichtung zur Identifikation der für den Datenverkehr berechtigten Personen vorgesehen ist.

## Claims

1. System for the maintenance of lift installations, escalators or moving walkways, consisting of a people/machine interface for data traffic between on-site and off-site maintenance personnel and a lift control, escalator control or moving walkway control, of communication means for on-site data traffic and of communication means for off-site data traffic, wherein the people/machine interface converts the data on the one hand into a form understandable for the control and on the other hand into a form understandable for persons, **characterised in that** a device is provided for verbal communication of the maintenance personnel with the control, wherein a speech-recognition/speech-synthesising unit (1) for conversion of the data, which are transmitted in verbal form, of the maintenance personnel into control data and for conversion of the control data into data able to be heard by the maintenance personnel is provided.

2. System according to claim 1, **characterised in that** the speech-recognition/speech-synthesising unit (1) is connected with a telephone network (9) and that the data traffic is possible by means of telephone (10, 11).

3. System according to one of claims 1 and 2, **characterised in that** the speech-recognition/speech-synthesising unit (1) comprises a computer unit (12) for controlling the data traffic, a library with speech patterns, memories (13, 14) with data and programs and converters (16, 17) for signal conversion.

4. System according to claim 3, **characterised in that** an identification device for identification of persons authorised for the data traffic is provided.

## Revendications

1. Système pour l'entretien d'installations d'ascenseurs, d'escaliers roulants ou de trottoirs roulants, composé d'une interface homme/machine pour la circulation de données entre le personnel d'entretien prévu sur place ou à l'arrière et une commande d'ascenseur, d'escalier roulant ou de trottoir roulant, de moyens de communication pour la circulation de données sur place et de moyens de communication pour la circulation de données vers l'arrière, l'interface homme/ machine convertissant les données d'une part en une forme compréhensible pour la commande et d'autre part en une forme compréhensible pour des personnes,
**caractérisé en ce qu'**il est prévu un dispositif pour la communication verbale entre le personnel d'entretien et la commande, étant précisé qu'il est prévu une unité de reconnaissance vocale/synthèse vocale (1) pour convertir en données de commande les données du personnel d'entretien stockées sous forme verbale, et pour convertir ces données de commande en données audibles par le personnel d'entretien.

2. Système selon la revendication 1, **caractérisé en ce que** l'unité de reconnaissance/synthèse vocale (1) est reliée à un réseau téléphonique (9), et **en ce que** la circulation de données est réalisable par téléphone (10, 11).

3. Système selon la revendication 1 ou 2, **caractérisé en ce que** l'unité de reconnaissance vocale/synthèse vocale (1) comporte une unité informatique (12) pour commander la circulation de données, une bibliothèque avec un modèle linguistique, des mémoires (13, 14) avec des données et des programmes, et des convertisseurs (16, 17) pour la conversion des signaux.

4. Système selon la revendication 3, **caractérisé en ce qu'**il est prévu un dispositif d'identification pour identifier les personnes autorisées pour la circulation de données.
